# EUROPEAN PATENT APPLICATION

(11) **EP 1 360 903 A1**
(43) Date of publication of application: **12.11.2003**
(21) Application number: 03252649.3
(22) Date of filing: 25.04.2003
(51) Int. Cl.: A21C 15/00, A21D 15/00

(54) **Treatment of food products**

(30) Priority: 07.05.2002 US 141166
(71) Applicant: THE BOC GROUP, INC., Murray Hill, New Providence, New Jersey 07974-2082 (US)
(72) Inventor: Newman, Michael D., Hillsborough, New Jersey 08844 (US); McCormick, Stephen A., Warrington, Pennsylvania 18976 (US); Dresselhaus, Helmut, Brookfield 4069 (AU)
(74) Representative: Wickham, Michael

(57) **Abstract**

An apparatus and method for providing treatment to a continuous supply of food product using a vacuum process includes compartments for receiving, treating, and expelling food products that are delivered to the apparatus on a continuous basis. The compartments have different pressures therein and in a preferred embodiment are separated from each other within the apparatus to treat the food product on a continual basis, as opposed to a batch-by-batch basis. Thus, a continuous supply of food products pass in sequence through an entry zone (or station) 32, a first treatment zone 34 operating at a subatmospheric pressure, a second treatment zone 36, an exhaust zone 38 for exhaust of a fluid treatment agent employed in the zone 36, and a product discharge zone 40.

## Description

### BACKGROUND OF THE INVENTION

### Field of the Invention

The invention generally relates to a treatment apparatus for providing treatment to a (continuous) supply of food product using a vacuum process. In one aspect, the invention relates to a treatment apparatus having a plurality of rotatable baffles defining compartments that permit a food product, in a continuous supply of food product, to experience a plurality of zones such that the food product is treated in a vacuum process. In another aspect, the invention relates to an apparatus having compartments and a conveyor mechanism, the conveyor mechanism transporting the food product, in the continuous supply of food product, through the compartments such that the food product is treated in the vacuum process.

### Description of the Related Art.

The preservation of perishable products has been, and continues to be, the focus of considerable commercial interest. By extending the shelf life of a food product, economic value can be added to that food product. Approaches to this end are many and varied (e.g., tight control of storage conditions, packaging, post and *in situ* applications of preservatives) and various combinations of these and other techniques are known and in practice to one extent or another.

In the context of food products, for example, baked goods (e.g., muffins, crumpets, scones, bagels, cookies, breads, etc.), all of the above techniques are in use. For example, baked goods can be placed in frozen or refrigerated storage, covered with anaerobic packaging, and/or supplemented by the addition of preservatives. When such preservatives are used, the preservative can be added to either a batter or a mix from which the baked goods are prepared. Also, the preservative can be applied to finished baked goods. With respect to the finished baked goods, application of a small amount of the preservative can extend the shelf life of the baked goods from a typical 6-8 days to an extended 14-16 days when all other conditions (e.g., packaging, storage conditions, and the like) are equal. These preservatives can include a wide variety of substances (i.e., microbiocidal substances, antimicrobial substances, etc.) such as acetic acid, lactic acid, carbonic acid, mixtures thereof, and the like.

In a typical preservative application process, a conventional treatment apparatus can be employed to administer the preservative. The conventional treatment apparatus essentially contains a movable hood in combination with a base. When in a closed relationship with one another, the hood and the base define a volume. The hood can be manipulated (e.g., raised and lowered) such that the baked goods to be treated can be inserted and removed from the volume. Further, the hood can be equipped with an entry port for receiving a treatment fluid (e.g., a preservative or a mixture containing the preservative such as a vaporized mixture of carbon dioxide and acetic acid). The base can comprise a platen, or in some cases, a platen associated with a movable base conveyor that rides upon the platen.

When the conventional treatment apparatus is in operation, the hood is raised, the baked goods riding on the base conveyor in batches are transported beneath the hood, and the base conveyor is temporarily halted. The hood is thereafter closed over, and sealed against, the platen and/or base conveyor such that a negative pressure (i.e., a vacuum) can be drawn within the volume of the treatment apparatus. After the vacuum is drawn, and atmosphere (e.g., air) within the sealed apparatus has been evacuated, the treatment fluid can be fed into the treatment apparatus such that the preservative coats onto and/or penetrates into the external surface of the baked goods. Thereafter, excess treatment fluid can be exhausted, the hood can be raised, and the batch of treated baked goods can be removed using the base conveyor. This "treatment cycle" is repeated for each succeeding or successive batch. A typical "batch-by-batch" treatment cycle, or application, takes approximately twenty-five to thirty (25 to 30) seconds to complete. Thus, using the batch-by-batch treatment cycle can create a significant delay within a baked good preparation process.

Further difficulty can be encountered when using the batch-by-batch treatment cycle since the baked goods are typically delivered from a continuous supply in, for example, an indexed array. These indexed arrays are maintained throughout a good portion of the baked good preparation process. However, the indexed arrays are not compatible with the batch-by-batch treatment cycle, and therefore, the index arrays of food product must be configured into batches of food product. For example, the baked goods are initially transported in the indexed array from a continuous supply of baked goods. Just prior to the indexed array of baked goods encountering the treatment apparatus, the indexed array of baked goods is disrupted and the baked goods are assembled into the batches used within the batch-by-batch treatment cycle. These batches can then be treated. Thereafter, the batches of baked goods are disassembled, the baked goods are collated, and the indexed array of baked goods is restored.

Besides the time delays that undoubtedly occur, additional equipment for constructing and deconstructing the batches must be provided. This equipment often occupies valuable floor space, presents elaborate controls, requires an equipment technician or operator, consumes energy, and the like.

Another problem with treating baked goods on the batch-by-batch basis is the need for a buffer tank. The buffer tank is typically disposed within a treatment fluid generation system between the conventional treatment apparatus and the remainder of the treatment fluid generation system. As such, the buffer tank acts as a reservoir for the treatment fluid. The buffer tank permits continuous receipt, and periodic discharge, of the treatment fluid. When the batch-by-batch treatment cycle is used, the fluid generation system can often produce the treatment fluid faster than the conventional treatment apparatus can apply the treatment fluid to the baked goods. Therefore, buffer tanks are often required.

Buffer tanks are frequently either heated or vacuum jacketed. Further, these buffer tanks are generally at least ten times the volume of the treatment apparatus to inhibit pressure changes within the treatment apparatus during the application of the treatment fluid. As the pressure within the buffer tank constantly changes to regulate the pressure in the treatment apparatus, a regulated, constant, volumetric fluid flow is required to encourage mixing efficiency of the fluid generation system. Thus, multiple modulating control valves, pressure regulators, and a control system are predominate.

The need for a buffer tank injects further time delay and cost into the treatment of food products such as baked goods. However, if the conventional treatment apparatus could be operated on a continuous basis, instead of on the batch-by-batch basis, the buffer tank could be eliminated. The treatment fluid could be transferred directly from the treatment fluid generation system to the treatment apparatus.

Thus, an apparatus and method for providing treatment to a continuous supply of food product, within a vacuum process, would be highly desirable. Likewise, a treatment apparatus capable of obviating a buffer tank would be highly desirable.

### SUMMARY OF THE INVENTION

According to the invention there are provided apparatuses for treating a food product as set out in claims 1-19 hereinbelow and methods for providing treatment to a food product as defined in claims 20 to 26 hereinbelow.

In one aspect, the invention provides an apparatus for providing treatment to a continuous supply of food product. The apparatus comprises a housing and a plurality of rotatable baffles within the housing. Together, the baffles and the housing define a plurality of compartments that encounter a plurality of zones (stations). Therefore, as the baffles rotate, the compartments pass through the zones. By passing through the zones, the food product, from the continuous supply of food product, is treated. The zones can include an entry zone, a reduced pressure zone, a treatment zone, an exhaust zone, and an exit zone.

The entry zone is capable of accepting delivery of the food product into the housing and one of the compartments. The reduced pressure zone is capable of succeeding the entry zone and is operated at a subatmospheric pressure. The treatment zone is capable of succeeding the reduced pressure zone, relieving the subatmospheric pressure within one of the compartments, and permitting application of a treatment fluid to the food product. The exhaust zone is capable of succeeding the treatment zone and permitting removal of any unused treatment fluid from one of the compartments. The exit zone is capable of succeeding the exhaust zone and permitting expulsion of the food product from one of the compartments and the housing. In preferred embodiments, the plurality of zones further includes a separation zone capable of separating, and providing space between, adjacent zones.

In one embodiment, the apparatus for providing treatment to a continuous supply of food product comprises a housing and a plurality of rotary baffles within the housing where the baffles contact an interior surface of the housing to provide sealed movable compartments within the housing. Again, the baffles and the housing define a plurality of compartments that are capable of experiencing a plurality of zones whereby, as the baffles rotate, the compartments experience the plurality of zones. As such, treatment is provided to the food product from the continuous supply of food product.

In another embodiment, the apparatus for providing treatment to a continuous supply of food product comprises a housing, a plurality of compartments within the housing, and a conveyor mechanism. In this embodiment, each of the compartments defines one of a plurality of zones and the conveyor mechanism transports the food product through the housing such that the food product experiences the plurality of zones. Therefore, as the conveyor mechanism progresses through the plurality of zones within the housing, the food product from the continuous supply of food product is treated. The zones can include an entry zone, a pressure zone, a separation zone, a treatment zone, an exhaust zone, and an exit zone.

In another aspect of the present invention, a method of providing treatment to a continuous supply of food product is provided. The method first comprises providing a treatment apparatus having a housing and a plurality of rotatable baffles within the housing. The baffles and the housing define a plurality of compartments. Next, the food product from the continuous supply of food product is introduced into a compartment within the plurality of compartments. As such, the food product is disposed within an entry zone.

The baffles are then rotated to transfer the food product in the compartment from the entry zone to a reduced pressure zone. The reduced pressure zone is operable at subatmospheric pressure. Thereafter, the baffles are rotated to transfer the food product in the compartment from the reduced pressure zone to a treatment zone. The treatment zone relieves the negative pressure within the compartment and permits application of a treatment fluid to the food product.

Once again, the baffles are rotated to transfer the food product in the compartment from the treatment zone to an exhaust zone. The exhaust zone permits removal of any unused treatment fluid from the compartment. Continuing, the baffles are further rotated to transfer the food product in the compartment from the exhaust zone to an exit zone. The exit zone permits expulsion of the food product from the compartment and the housing since the food product in the continuous supply of food product has now been treated.

In another aspect, the invention provides a method for providing treatment to a food product. The method can comprise the steps of subjecting a food product to a first treatment zone, providing a first pressure differential to the first treatment zone having the food product, subjecting the food product to a second treatment zone separate and discrete from the first treatment zone, and providing a second pressure differential to the second treatment zone with the food product therein for application of the treatment to the food product.

### BRIEF DESCRIPTION OF THE DRAWINGS

Embodiments of the invention are disclosed with reference to the accompanying drawings and are for illustrative purposes only. The invention is not limited in its application to the details of construction or the arrangement of the components illustrated in the drawings. The invention is capable of other embodiments or of being practiced or carried out in other various ways. Like reference numerals are used to indicate like components.
Figure 1 illustrates a schematic flow diagram of one embodiment of a process for preparing a baked food product.
Figure 2 illustrates a schematic flow diagram of another embodiment of a process for preparing a baked food product.
Figure 3 illustrates a perspective view of one embodiment of a treatment apparatus according to the present invention capable of use with the processes of Figures 1 and 2.
Figure 4 illustrates another perspective view of the treatment apparatus of Figure. 3.
Figure 5 illustrates a top, cross-sectional view of the treatment apparatus taken along line 5-5 of Figure 3.
Figure 6 illustrates a perspective view of an embodiment of the treatment apparatus of Figure 3 employing gravity-assisted product entry and product exit conduits.
Figure 7 illustrates a cross-sectional, side elevational view of another embodiment of a treatment apparatus according to the present invention capable of use with the processes of Figures 1 and 2.
Figure 8 illustrates a partial perspective view of the treatment apparatus of Figure 7.
Figure 9 illustrates a schematic diagram for one embodiment of a treatment fluid generation system capable of employing the treatment apparatus of Figures 3-5 or 7-8.
Figure 10 illustrates an enlarged schematic of a mixing zone of Figure 9.

### DETAILED DESCRIPTION OF THE PREFERRED EMBODIMENTS

Various items of equipment, such as fittings, valves, mountings, pipes, sensors, monitoring equipment, wiring, and the like have been omitted to simplify the description. However, such conventional equipment and its uses are known to those skilled in the art and can be employed as desired. Moreover, although the present invention is described below in the context of applying a treatment fluid containing a preservative (e.g., a mixture of carbon dioxide and acetic acid) to a baked good, the invention can be employed with, and has applicability to, many different application processes.

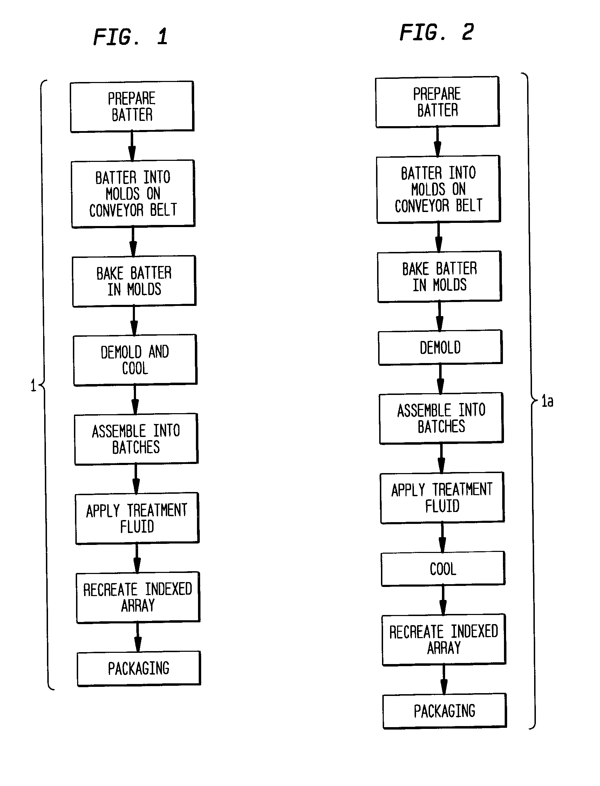

Referring to Figure 1, a broad outline 1 for preparation of commercial quantities of a food product, for example a baked good (e.g., muffin, crumpet, scone, bagel, cookie, bread, and the like) is illustrated. Batter is prepared and then poured into molds that are either carried on, or form a part of, a conveyor mechanism. The conveyor mechanism moves the batter through a baking zone in which the batter is fully baked.

Upon leaving the baking zone, the baked good is de-molded, typically onto a second conveyor mechanism. The de-molding procedure typically deposits the baked goods upon the second conveyor mechanism such that the baked goods are arranged in an indexed array. The indexed array of baked goods are then conveyed through a cooling tunnel to bring the baked goods to a temperature appropriate for packaging (e.g., room temperature or slightly above).

In some instances as illustrated in Figure 1, prior to packaging, the baked goods will pass through a conventional treatment apparatus. Prior to encountering the conventional treatment apparatus, the baked goods are assembled into batches. In batches, the baked goods are transported through the conventional treatment apparatus where a treatment fluid containing a preservative is applied to an external surface of the baked goods. Typical preservatives can include a wide variety of substances (i.e., microbiocidal substances, antimicrobial substances, etc.) such as acetic acid, lactic acid, carbonic acid, mixtures thereof, and the like. Preservatives have the ability to radically drop the pH of food products and, as such, can eradicate and/or eliminate any bacteria present within the food product. The treatment fluid can comprise a preservative or a mixture containing the preservative. For example, a vaporized mixture of carbon dioxide and acetic acid can be employed as the treatment fluid.

In other instances, as illustrated by outline 1a in Figure 2, placement of the cooling tunnel and the conventional treatment apparatus are reversed. In other words, the baked goods are de-molded, assembled into batches, treated with the treatment fluid, cooled, restored to the indexed array, and then packaged. Outlines 1, 1a are further discussed in co-pending U.S. patent application Ser. No. 09/819,513 filed March 28, 2001, (still pending) entitled "Apparatus and Method for Mixing a Gas and a Liquid" which corresponds to EP-A-1 247 561. While outlines 1, 1a are representative of steps that can be taken during the preparation of commercial quantities of a food product, other food preparation methods and process can be employed.

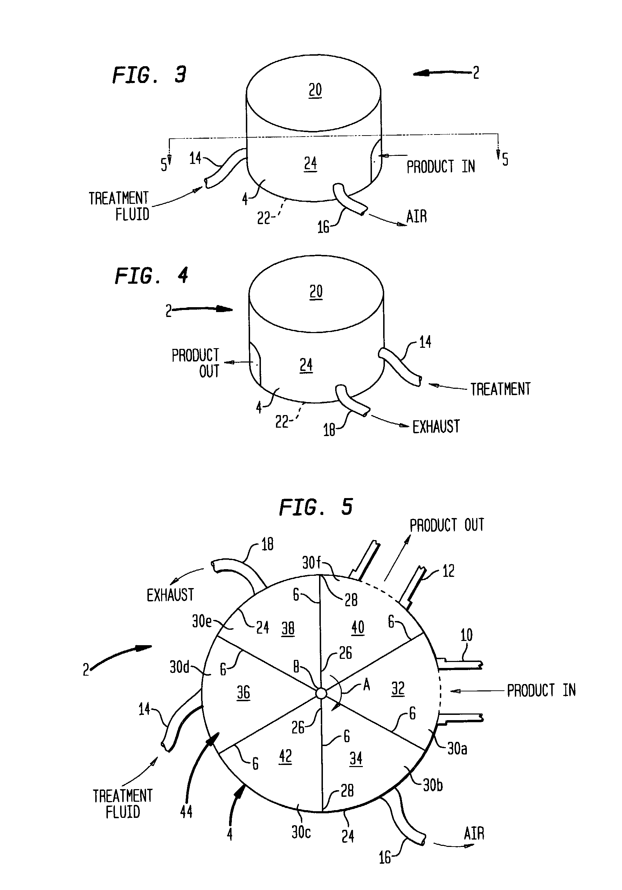

In Figures 3-5, one embodiment of a treatment apparatus 2 according to the present invention is illustrated. As will be explained in detail, treatment apparatus 2 is capable of processing and/or treating one or more "food products" (not shown) that are delivered to the treatment apparatus on a continuous basis. In other words, treatment apparatus 2 can treat a continuous supply of the food products. Thus, as used herein, unless specifically stated otherwise, the phrases "food product" or "food products" refer to one or more food products that can be treated on a continual basis or whose genesis is from a continuous supply of food products.

Treatment apparatus 2 comprises housing 4 and a plurality of rotatable baffles 6. In some embodiments, treatment apparatus 2 can further comprise shaft 8, product entry conduit 10, product exit conduit 12, treatment fluid conduit 14, negative pressure conduit 16, and exhaust conduit 18.

As shown in Figures 3 and 4, housing 4 can be constructed of a variety of materials, such as stainless steel, and in a variety of shapes, such as a drum. Housing 4 defines a top 20, a bottom 22, and a periphery 24.

Referring to Figure 5, baffles 6 are disposed within housing 4. Baffles 6 can be constructed of a variety of fluid-impervious substances (e.g., stainless steel) and are arranged and adapted to rotate within housing 4. Each baffle 6 includes an inner end 26 and an outer end 28. Each inner end 26 can be secured (e.g., welded) to another inner end, secured to shaft 8, or secured to both another inner end and to the shaft. Outer ends 28 can sealingly engage housing 4 proximate periphery 24 and baffles 6 can sealingly engage housing 4 proximate top 20 and bottom 22. Therefore, a fluid-impermeable seal can be provided between baffles 6 and housing 4. Thus, baffles 6 and housing 4, and in some cases shaft 8, can define a plurality of compartments 30a, 30b, 30c, 30d, 30e, 30f (collectively 30) within the housing.

Compartments 30 are adapted for tolerating and/or experiencing pressure differentials. For example, compartments 30 can be maintained at an ambient pressure or can, at times, be evacuated of atmosphere (e.g., air) such that the compartment entertains a negative pressure (e.g., a vacuum). Further, compartments 30 can maintain the negative pressure or can, if desired, release the negative pressure to restore, or substantially restore, the ambient pressure.

As shown in Figure 5, product entry conduit 10 extends through periphery 24 of housing 4 such that the food product can be delivered to compartment 30a which is in communication with the product entry conduit. Therefore, product entry conduit 10 can introduce the food products to housing 4 and/or treatment apparatus 2. Product exit conduit 12 extends through periphery 24 of housing 4. As such, any food product removed from compartment 30f, which is in communication with product exit conduit 12, can be transported. Therefore, product exit conduit 12 can receive and convey expelled food products from housing 4 and/or treatment apparatus 2.

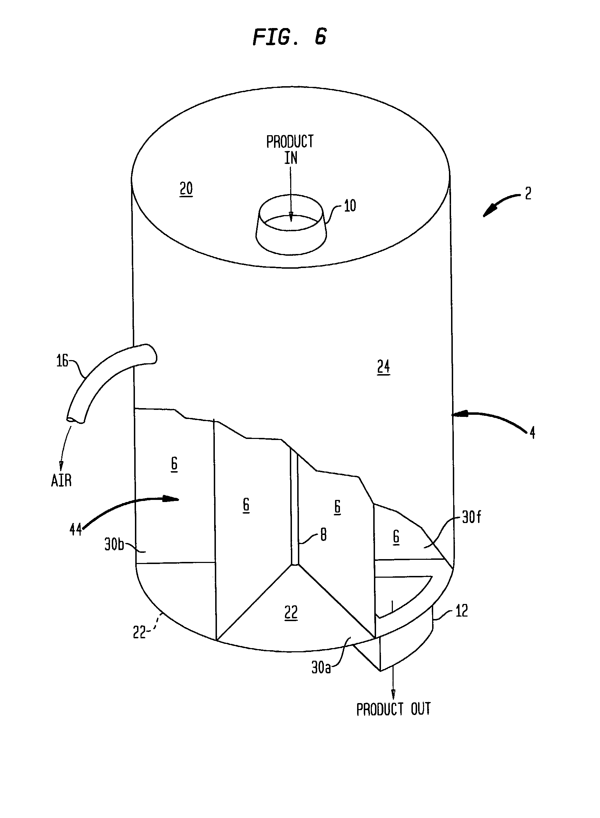

In one embodiment, as illustrated in Figure 6, product entry conduit 10 can be associated with top 20. Further, product exit conduit 12 can be associated with bottom 22. In this embodiment, the food product can still be delivered to, and transported away, from compartments 30. However, as Figure 6 shows, the construction and arrangement of product entry conduit 10 and product exit conduit 12 permit gravity to be used to assist and/or aid in delivery and transportation of the food product.

As illustrated in Figures 3 and 5, negative pressure conduit 16 extends through periphery 24 of housing 4. As such, atmosphere within compartment 30b, which is currently proximate to, and in communication with, negative pressure conduit 16 can be evacuated until, in some embodiments, a negative pressure (i.e., a vacuum) is created and/or produced within that compartment.

Referring to Figures 3-5, treatment fluid conduit 14 extends through periphery 24 of housing 4 such that the treatment fluid conduit can deliver and/or introduce treatment fluid to compartment 30d which is currently proximate to, and in communication with, the treatment fluid conduit. When introduced into compartment 30d, the treatment fluid is initially subjected to the negative pressure provided by negative pressure conduit 16 However, as the introduction of treatment fluid continues, the negative pressure within compartment 30d is relieved until the ambient pressure is substantially restored within the compartment. The change in pressure from negative to substantially ambient encourages and/or promotes absorption of the treatment fluid into the food product.

As shown in Figures 4 and 5, exhaust conduit 18 extends through periphery 24 of housing 4 such that unused, unwanted, and/or remaining treatment fluid can be evacuated from compartment 30e, housing 4, and apparatus 2.

Despite numerous ingress and egress appliances and/or components being described as conduits 10, 12, 14, 16, 18 (collectively 10-18), various fixtures, fittings, conveyors, and the like, are contemplated and can be employed in place of the conduits and provide treatment apparatus 2 with the same or similar benefit.

In Figure 5, shaft 8, or similar mechanism, can drive baffles 6 such that the baffles rotate in an operational direction (e.g., clockwise) as shown by directional arrow A. Since housing 4 typically remains stationary as baffles 6 are driven or otherwise rotated, compartments 30 change position within, and relative to, housing 4 and conduits 10-18. As each compartment 30 moves through housing 4, the compartment is subjected to and/or passes a plurality of zones (or stations) 32, 34, 36, 38, 40, 42 (collectively 32-42) within an interior volume 44 of housing 2. Moreover, outer ends 28 of baffles 6 contact and/or brush against periphery 24 of housing 4 as shaft 8 rotates to provide rotatable, sealed compartments 30.

Entry zone 32 is defined as that portion of interior volume 44 within housing 4 proximate and in communication with product entry conduit 12. Therefore, when food product is delivered to treatment apparatus 2, the food product temporarily resides or is disposed within compartment 30a which is currently occupying entry zone 32 as shown in Figure 5. Entry zone 32 is typically at an ambient pressure since compartment 30a and product entry conduit 12 are normally in open communication with each other and the ambient pressure outside treatment apparatus 2.

Reduced pressure zone 34 is defined as that portion of interior volume 44 within housing 4 proximate and in communication with negative pressure conduit 16. Therefore, negative pressure conduit 16 can remove air from compartment 30b, which is currently occupying pressure zone 34, as shown in Figure 5. As such, food product disposed within pressure zone 34 can experience the negative (i.e. subatmospheric) pressure. In preferred embodiments, as illustrated in Figure 5, pressure zone 34 can be adjacent to entry zone 32.

Treatment zone 36 is defined as that portion of interior volume 44 within housing 4 proximate and in communication with treatment fluid conduit 14. Therefore, treatment fluid conduit 14 can introduce treatment fluid into compartment 30d, which is currently occupying treatment zone 36, as shown in Figure 5. Within compartment 30d, the negative pressure that was introduced at reduced pressure zone 34 can be relieved as treatment fluid continues to be introduced. Preferably, the treatment fluid continues to be introduced until the ambient pressure is substantially restored within compartment 30d. As such, food product disposed within treatment zone 36 is subjected to application of the treatment fluid while the negative pressure within compartment 30d is relieved. In preferred embodiments as illustrated in Figure 5, treatment zone 36 follows reduced pressure zone 34, however, these two zones, which might otherwise be adjacent, are separated by separation zone 42 which is detailed below.

Exhaust zone 38 is defined as that portion of interior volume 44 within housing 4 proximate and in communication with exhaust conduit 18. Therefore, exhaust conduit 18 can remove any unused (i.e., remaining and/or excess) treatment fluid from compartment 30e occupying exhaust zone 38 as shown in Figure 5. In preferred embodiments, exhaust zone 38 can be adjacent to treatment zone 36.

Exit zone 40 is defined as that portion of interior volume 44 within housing 4 proximate and in communication with product exit conduit 12. Therefore, product exit conduit 12 can expel, discharge or remove the food product from compartment 30f, which is currently occupying entry zone 40, as shown in Figure 5. In preferred embodiments, exit zone 40 is between, or can be adjacent to, exhaust zone 38 and entry zone 32.

In preferred embodiments, as shown in Figure 5, the plurality of adjacent zones 32, 34, 36, 38, 40 (collectively 32-40) within housing 4 further includes one or more separation zones 42 such as the separation zone which is currently occupying or coincident with compartment 30c. Separation zones 42 are defined as that portion of interior volume 44 within housing 4 not proximate to, or in communication with, conduits 10-18 and/or that portion of the interior volume within the housing capable of separating zones 32-42 and/or adjacent zones 32-40. Thus, separation zones 42 provide a space or an interval between zones 32-40. In preferred embodiments, separation zone 42 is disposed between reduced pressure zone 34 and treatment zone 36. Thus, reduced pressure zone 34 and treatment zone 36 are each adjacent to a separation zone 42.

Separation zone 42 as shown in Figure 5 can be employed between reduced pressure zone 34 and treatment zone 36 to ensure that the treatment fluid is prevented from reaching the reduced pressure zone. Should treatment fluid somehow escape treatment zone 36, for example, due to a failing baffle seal or other malfunction, separation zone 42 inhibits and/or prevents the treatment fluid from reaching reduced pressure zone 34. In effect, separation zone 42 functions as a barrier between treatment zone 36 and reduced pressure zone 34. If the treatment fluid were to reach reduced pressure zone 34, the treatment fluid could be ingested by a vacuum pump or like device, which is often in communication with the reduced pressure zone, thereby causing damage to the pump or device. Therefore, one or more separation zones 42 can be employed within housing 4.

In operation, a first food product (not shown) is introduced into housing 4 through product entry conduit 10. Upon reaching housing 4, the first food product is introduced into compartment 30a. As such, the first food product temporarily resides within compartment 30a, which is currently occupying entry zone 32. Thereafter, shaft 8 is rotated to move baffles 6, and resultantly compartments 30, in the direction of directional arrow A as shown in Figure 5. Rotation causes the first food product within compartment 30a to be transferred from entry zone 32 to pressure zone 34. During the transfer between zones (e.g., between zones 32 and 34), the first food product remains in compartment 30a that received the food product from product entry conduit 10. In other words, when the product moves from zone to zone (e.g., 32 to 34), the product remains in the compartment into which the food product was introduced. As an example, a food product does not move from compartment 30a to compartment 30b as that food product passes from zone 32 to zone 34. When the first food product is transferred between zones, an "additional" food product can be simultaneously introduced into a "newly defined" compartment 30a which is now, due to rotation of the compartments, empty and in communication with entry conduit 10.

After the first food product is subjected to reduced pressure zone 34, the first food product is moved through housing 4 as baffles 6 and, therefore compartments 30, rotate. Rotation transfers the first food product from reduced pressure zone 34 to, in preferred embodiments, separation zone 42. Simultaneously, the "additional" food product occupying entry zone 32 is transferred to reduced pressure zone 34 and a "further additional" food product can be introduced into a "another" compartment 30a since that compartment has once again been rendered empty by the rotation of the compartments.

As compartments 30 continue to move, the first food product passes through separation zone 42, treatment zone 36, exhaust zone 38, and exit zone 40 where the treated first food product can be expelled and/or discharged from compartment 30f, housing 4, and/or treatment apparatus 2 for eventual packaging. As before, when the first food product is transferred from zone to zone, the additional food product is transferred from zone to zone, and further additional food products are simultaneously received into new compartment 30a. In other words, one of the compartments 30 continually accepts new food products, transports food products between zones, and discharges treated food products such that treatment apparatus 2 remains packed with food products during operation.

By using compartments 30 to transfer the food product through multiple zones 32-42, treatment apparatus 2 is capable of providing treatment to a continuous supply of the food product. The food product can travel through treatment apparatus 2 on a continuous and/or uninterrupted basis without having to be assembled into batches. Time delays in assembling the batches, as well as numerous pieces of batch assembly equipment, can be eliminated from the food product treatment process.

In preferred embodiments, rotation of baffles 6 and compartments 30 is continuous for extended periods of time. However, it is also contemplated that rotation of baffles 6 and compartments 30 can be selectively irregular, intermittent, briefly paused, and/or some combination thereof, while still possessing the ability to accommodate the continuous supply of food product. For example, rotation can be temporarily paused or halted depending on properties of rotation (e.g., rate, acceleration and/or duration of rotation) which depend on, for example, the food product being treated, the time each zone needs to perform its designated function, efficiency of associated components (e.g., vacuum pumps, etc.), along with a host of other factors. Despite any temporary cessation of rotation, treatment apparatus 2 can still accommodate the continuous supply of food product and does not require the assembly of batches.

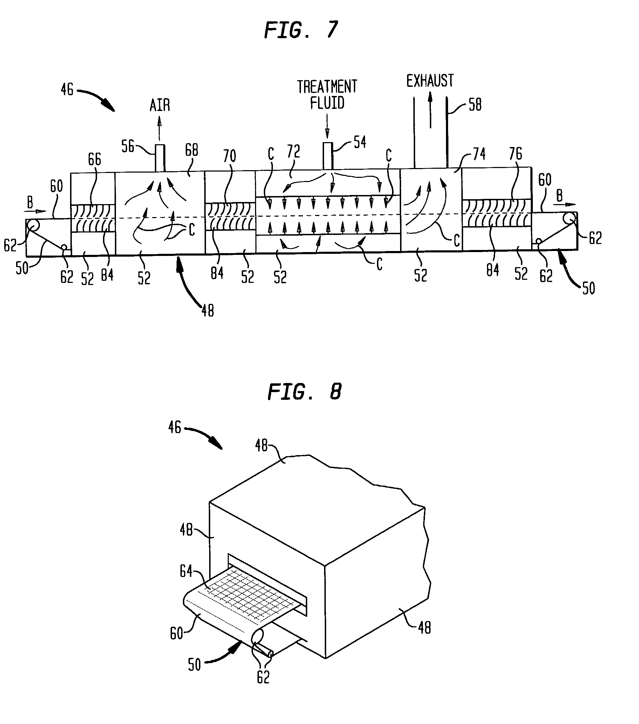

Referring to Figure 7, another embodiment of a treatment apparatus 46 according to the invention is illustrated. In this embodiment, treatment apparatus 46 includes housing 48, conveyor mechanism 50, and a plurality of compartments 52. Treatment apparatus 46 can further include treatment fluid conduit 54, negative pressure conduit 56, and exhaust conduit 58.

Conveyor mechanism 50 includes a conveyor belt 60 and rollers 62. As illustrated in Figures 7 and 8, all or a portion of conveyor belt 60 can travel through treatment apparatus 46. Also, conveyor mechanism 50, and in particular conveyor belt 60, is capable of receiving the food product and introducing the food product into housing 48 of treatment apparatus 46, transferring or progressing the food product through the treatment apparatus, and thereafter delivering treated food product from the housing and the treatment apparatus. In preferred embodiments, at least one of roller 62 accepts torque from a drive motor (not shown) and, as shown in Figure 8, conveyor belt 60 contains perforations and/or apertures 64. Apertures 64 can, among other things, provide the treatment fluid with increased access to those food products disposed upon conveyor belt 60.

Unlike compartments 30 in previous embodiments, compartments 52 as depicted in Figure 7 are stationary. As a result, in contrast to compartments 30, compartments 52 do not travel or pass through zones 32-42. Instead, each compartment 52 defines one of a plurality of zones 66, 68, 70, 72, 74, 76 (collectively 66-76). Zones 32-42 and conduits 14, 16, 18, as described and illustrated in Figure 5, function similarly to zones 66-76 and conduits 78, 80, 82 shown in Figure 7. However, product entry conduit 10 and product exit conduit 12 as described and illustrated in Figure 5 are replaced by conveyor mechanism 50 as shown in Figure 7. Therefore, entry zone 66 and exit zone 76 are defined as the zone proximate the insertion and removal of conveyor belt 60 from housing 48, respectfully. In Figure 7, direction of the food product through treatment apparatus is shown by directional arrow B, while paths for various fluids (e.g., air, treatment fluid, gases, etc.) are shown by directional arrow C.

Within treatment housing 48 and/or apparatus 46, entry zone 66, separation zone 70, and exit zone 76 include one or more pressure baffles 84. Pressure baffles 84 inhibit and/or prevent loss of the vacuum selectively provided within housing 48 at zone 68. Pressure baffles 84 can be constructed of fluid-impervious materials such as rubber, thin stainless steel, ultra-high molecular weight polyethylene (UHMW) and do not substantially interfere with the transportation of the food product through compartments 52 and/or treatment apparatus 46.

Still referring to Figure 7, in operation and in preferred embodiments, the food product is transported by conveyor belt 60 into housing 48 and through entry zone 66, through reduced pressure zone 68, through separation zone 70, through treatment zone 72, through exhaust zone 74, and then through exit zone 76 and out of the housing. After the food product has progressed through the zones 66-76, the food product is treated and ready for packaging.

The terms continuous supply, continual supply, continuing supply, and the like, are defined as an unbroken, enduring and/or perpetual quantity of, for example, the food product. However, as used herein, the scope of the terms can also include a broken, intermittent, discontinuous, and/or irregular quantity of the food product that is repeated, recurring, and/or persistent. In other words, the continuous, continual, and/or continuing supply of the food product can be delivered in an uninterrupted and unbroken chain of the food product, a series of chains of the food product, and/or some combination thereof.

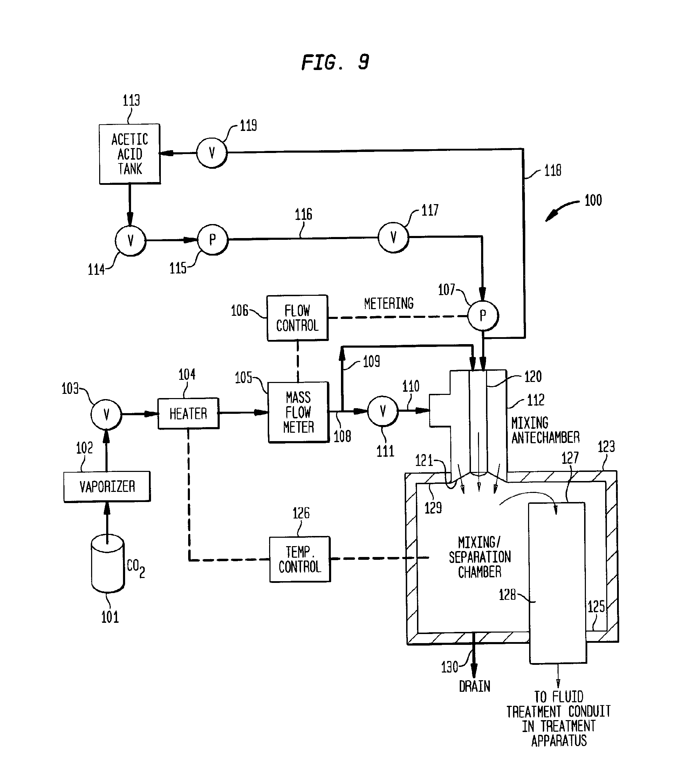

A fluid generation system 100 can be used with treatment apparatus 2, 46, as illustrated in Figure 9, which is capable of mixing a carrier gas and vaporized liquid with little, if any, entrained droplets. In fluid generation system 100, tank 101 holds liquid carbon dioxide, typically at about three hundred (300) psig. Liquid carbon dioxide is transferred to vaporizer 102 and converted to a gas substantially, if not completely, free of any droplets. The gas is then passed through pressure reduction valve 103 and the pressure of the gas is dropped from three hundred (300) psig to one hundred (100) psig. The gaseous CO₂ is then transferred to heater 104 and heated to essentially the same temperature as the contents of mixing/separation chamber 123 (e.g., 140° F). Temperature control unit 126 coordinates the temperature of heater 104 and of chamber 123. From heater 104, the gaseous carbon dioxide at one hundred (100) psig is transferred to mass flow meter 105, which is controlled by flow control 106. As long as pump 107 is in proper operation, flow control 106 allows carbon dioxide to move from mass flow meter 105 into pipe 108. Pipe 108 divides into pipes 109 and 110. While the amount of carbon dioxide each of pipes 109 and 110 will carry can vary, typically pipe 109 will carry about ten percent (10%) weight and pipe 110 will carry the remaining about ninety percent (90%) weight of the carbon dioxide. The stream of carbon dioxide passing through in pipe 110 can also passes through control valve 111 before entering mixing antechamber 112.

Liquid acetic acid is removed from tank 113 through check valve 114 by the action of pump 115. The liquid acetic acid moves through line 116 and valve 117 into metering pump 107. If atomization nozzle 120 is operational, then the liquid acetic acid is fed into the atomization nozzle where the liquid acetic acid is atomized with carbon dioxide delivered to the nozzle through line 109. If atomization nozzle 120 is not operative, then the liquid acetic acid is returned to tank 113 by way of line 118 and check valve 119.

Atomized acetic acid is transferred from atomization nozzle 120 into the upper section of mixing/separation chamber 123 in which it is vaporized by contact with carbon dioxide delivered from mixing antechamber 112 through orifice plate 121. The carbon dioxide delivered from line 110 into antechamber 112 passes through pressure reduction valve 111 in which the pressure of the carbon dioxide is reduced from one hundred (100) psig to about five (5) psig. The pressure of the atomized acetic acid as delivered to mixing/separation chamber 123 is also about five (5) psig. The temperature, pressure and volume of carbon dioxide introduced into the upper section of mixing/separation chamber 123 is sufficient such that the atomized acetic acid is essentially completely vaporized upon contact with it.

Atomization nozzle 120 passes through antechamber 112 and orifice plate 121, and is in communication with the upper section of mixing/separation chamber 123. Atomization nozzle 120 can extend into the upper section of mixing/separation chamber 123 any convenient length, but typically the end of the nozzle is flush with or extends only a short distance beyond orifice plate 121.

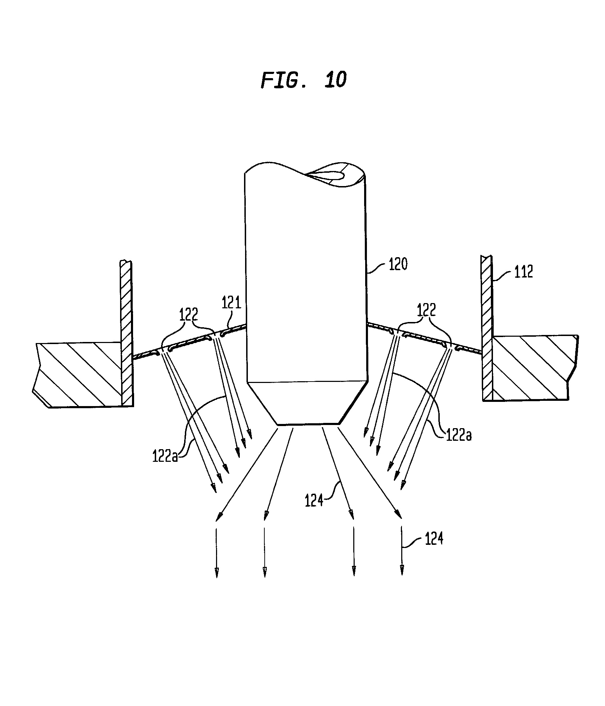

Referring to Figure 10, orifice plate 121 separates antechamber 112 from the upper section of mixing/separation chamber 123, and it encircles the lower end of atomization nozzle 120. Typically, orifice plate 121 is located in the entry port of chamber ceiling or top wall 129, and it is angled in such a manner that at least one, and preferably a plurality of, orifices 122 are slanted in the direction of atomized mixture spray 124. The number, size and position of orifices 122 in orifice plate 121 can vary to convenience. In a preferred embodiment, orifice plate 121 is heated.

Carbon dioxide gas moves under a positive pressure from antechamber 112 into spray 124, which is discharged from the end of atomization nozzle 120. The area in the upper section of mixing/separation chamber 123 in which carbon dioxide gas 122a impinges upon spray 124 is the mixing zone of the chamber. The remainder of mixing/separation chamber 123 is the separation zone, which includes virtually all of the lower section of the chamber. Within the mixing zone, the atomized acetic acid is vaporized into gaseous acetic acid and residual acetic acid droplets.

Referring again to Figure 9, the residual acetic acid droplets separate gravitationally from the mixture of gaseous carbon dioxide and acetic acid as this mixture circulates about the separation zone of chamber 123. Eventually the residual acetic acid droplets collect on floor 125 of chamber 123. In a preferred embodiment, floor 125 is heated to promote evaporation of the collected residual acetic acid droplets. Alternatively or in combination with the heated floor, the residual acetic acid droplets are continuously or periodically withdrawn from chamber 123 through drain 130.

Mixing/separation chamber 123 is made of any conventional material, is well insulated, and is constructed to hold a positive pressure (e.g., between about five to twenty (5-20) psig). Chamber 123 is equipped with a temperature sensor (not shown) which is connected to temperature control 126 which in turn is connected to heater 104. Temperature control 106 adjusts heater 104 to raise the temperature of the carbon dioxide fed into antechamber 112 so as to maintain a desired temperature (e.g., 140°F), in mixing/separation chamber 123. Chamber 123 can also be equipped with a pressure sensor and pressure relief valve (both of which are not shown). The pressure sensor (not shown) can relay information to pump 107 and/or mass flow meter 105.

Occasionally, a small amount of residual droplets of acetic acid pass into the separation zone of chamber 123. This mixture of gaseous carbon dioxide and acetic acid and residual acetic acid droplets is under a positive pressure and as such, it disburses throughout the internal volume of chamber 123 (except the mixing zone which itself is under positive pressure from both the mixture ejected from atomization nozzle 120 and the carbon dioxide ejected from the antechamber 112). This positive pressure eventually forces the gaseous acetic acid free of a substantial amount of the residual droplets through entrance port 127, into and though exit conduit 128, and eventually out of chamber 123. Since entrance port 127 of discharge conduit 128 is located in the upper section, preferably near ceiling 129 of chamber 123, most, if not all, of the residual droplets of acetic acid have separated from the gaseous mixture due to the influence of gravity. These droplets will condense on the internal walls of chamber 123 and the external walls of exit conduit 128, eventually collecting on floor 125.

The application of the gaseous mixture of carbon dioxide and vaporous acetic acid discharged at conduit 128 from fluid generation system 100 is provided to treatment apparatuses 2, 46 at treatment fluid conduits 14, 54. As such, the mixture can be applied to the food product on a continuous basis to correspond to the continuous basis of the vaporization of liquid acetic acid with gaseous carbon dioxide. Thus, the need for a conventional buffer tank is eliminated. The gaseous mixture discharged from exit conduit 128 is transferred directly, in preferred embodiments, to treatment apparatus 2 or treatment apparatus 46.

Commonly-owned, co-pending U.S. patent application Ser. No. 09/819,513 filed March 28, 2001, entitled "Apparatus and Method for Mixing a Gas and a Liquid" and corresponding to EP-A-1 247 561 discloses other and various embodiments and components within a fluid generation system and, therefore, the contents and disclosure of that application are incorporated into the present application by this reference as if fully set forth herein.

Despite any methods being outlined in a step-by-step sequence, the completion of acts or steps in a particular chronological order is not mandatory. Further, elimination, modification, rearrangement, combination, reordering, or the like, of acts or steps is contemplated and considered within the scope of the description and appended claims.

## Claims

1. An apparatus for providing treatment to a continuous supply of food product, the apparatus comprising:
a housing;
a plurality of baffles within the housing, the baffles constructed and arranged to provide a plurality of separate compartments in the housing;
a plurality of zones (or stations) in the housing and through which the plurality of compartments pass, the plurality of zones comprising:
an entry zone through which the compartments pass to receive the food product into one of the compartments;
a reduced pressure zone succeeding the entry zone for evacuating one of the compartments;
a treatment zone succeeding the reduced pressure zone for restoring the pressure in the evacuated compartment and at which a treatment fluid is able to be provided to the food product;
an exhaust zone succeeding the treatment zone for removal of unused treatment fluid from one of the compartments; and
an exit zone succeeding the exhaust zone for expulsion of the food product from one of the compartments and the housing;
wherein, the plurality of compartments are adapted to pass through the plurality of zones for applying the treatment fluid to the food product from the continuous supply of food product.

2. An apparatus according to Claim 1, wherein the plurality of zones further comprises a separation zone adapted to separate a pair of sequential stations.

3. An apparatus according to Claim 1, further comprising an entry conduit associated with the housing for permitting delivery of the food product to one of the compartments at the entry zone, and an exit conduit associated with the housing for permitting delivery of the food product from one of the compartments at the exit zone.

4. An apparatus according to Claim 3, wherein the entry conduit and the exit conduit are at different positions with respect to the housing to use gravity to deliver the food product to and from the compartments.

5. An apparatus according to any one of the preceding claims, further comprising a rotary shaft to which the baffles are mounted.

6. An apparatus according to any one of the preceding claims, further comprising a treatment fluid conduit associated with the housing for delivery of the treatment fluid to the treatment zone.

7. An apparatus according to any one of the preceding claims, further comprising a negative pressure conduit associated with the housing for evacuating the reduced pressure zone, and an exhaust conduit associated with the housing for removal of unused treatment fluid from the exhaust zone.

8. An apparatus according to any one of the preceding claims, wherein the plurality of baffles are movable within the housing to contact an interior surface of the housing to provide sealing of the plurality of compartments within the housing.

9. An apparatus according to any one of the preceding claims, further comprising:
a conveyor mechanism to which the plurality of baffles are mounted and which is able to transport the food product through the housing such that the food product is subjected to the plurality of zones;
wherein progression of the conveyor mechanism through the plurality of zones within the housing treats the food product from the continuous supply of food product.

10. An apparatus according to Claim 9, wherein the conveyor mechanism comprises a conveyor belt having a plurality of apertures therein.

11. An apparatus for providing treatment to a food product, comprising:
means for conveying the food product;
a first treatment zone associated with the conveying means for receiving the food product and being adapted to provide a first pressure at the food product; and
a second treatment zone associated with the conveying means for receiving the food product after the first treatment zone and spaced apart from the first treatment zone, the second treatment zone adapted to provide a second pressure at the food product for application of the treatment to the food product.

12. An apparatus according to Claim 11, further comprising barrier means disposed between the first and second treatment zones.

13. An apparatus according to Claim 12, wherein the barrier means is movable.

14. An apparatus according to Claim 13, wherein the movable barrier means is rotatable with respect to the conveying means.

15. An apparatus according to any one of Claims 12 to 14, wherein the barrier means comprises at least one baffle.

16. An apparatus according to any one of the preceding claims, further comprising an exhaust means associated with the conveying means for exhausting unused treatment fluid.

17. An apparatus according to any one of the preceding claims, wnerein the conveying means comprises a conveyor belt.

18. An apparatus according to any one of the preceding claims, wherein the conveying means comprises an inlet for the food product at a first side of the conveying means, and an outlet for the food product at a second side of the conveying means disposed lower than the inlet at the first side.

19. An apparatus according to any one of Claims 11 to 16, wherein the conveying means comprises a plurality of compartments adapted for movement with the conveying means through the first and second treatment zones, each one of the plurality of compartments sized and shaped to receive food products.

20. A method for providing treatment to a food product, comprising the steps of:
(a) subjecting a food product to a first treatment in a first zone at a first pressure; and
(b) subjecting the food product to a second treatment at a second pressure in a second zone separate and discrete from the first treatment zone, the second pressure being different from the first pressure.

21. A method according to Claim 20, wherein the second pressure is greater than the first pressure.

22. A method according to Claim 20 or Claim 21, further comprising the step of removing the treated food product after the second treatment zone.

23. A method according to any one of Claims 20 to 22, wherein the steps (a) and (b) are performed continuously.

24. A method according to any one of Claims 20 to 23, wherein the food product is moved along a rotational path.

25. A method according to any one of Claims 20 to 23, wherein the food product is moved along a straight linear path.

26. A method according to any one of Claims 20 to 25, further comprising the steps of:
providing the food product by gravity before the step (a); and
removing the food product by gravity after the step (d).
